# EUROPÄISCHE PATENTSCHRIFT

(11) **EP 3 061 954 B1**
(45) Veröffentlichungstag und Bekanntmachung des Hinweises auf die Patenterteilung: **13.12.2017**
(21) Anmeldenummer: 16000042.8
(22) Anmeldetag: 11.01.2016
(51) Int. Cl.: F02D 41/00, F02B 37/10, F02B 37/14, F02B 39/10, F02D 9/06, F02D 9/08, F02B 37/24, F02D 41/22, F02D 41/02, F02D 31/00

(54) **VERFAHREN UND VORRICHTUNG ZUR ANSTEUERUNG EINES ANTRIEBSSYSTEMS EINES KRAFTFAHZEUGS MIT EINER AUFGELADENEN BRENNKRAFTMASCHINE**
METHOD AND DEVICE FOR CONTROLLING A DRIVE SYSTEM OF A MOTOR VEHICLE WITH A CHARGED COMBUSTION ENGINE
PROCÉDÉ ET DISPOSITIF DE COMMANDE D'UN SYSTÈME D'ENTRAÎNEMENT D'UN VEHICULE AUTOMOBILE ÉQUIPÉ D'UN MOTEUR À COMBUSTION INTERNE CHARGÉ

(30) Priorität: 28.02.2015 DE 102015002598
(43) Veröffentlichungstag der Anmeldung: 31.08.2016
(73) Patentinhaber: MAN Truck & Bus AG, 80995 München (DE)
(72) Erfinder: Pappenheimer, Andreas, 91792 Ellingen (DE); Sommermann, Andreas, 91560 Heilsbronn (DE)
(74) Vertreter: v. Bezold & Partner Patentanwälte - PartG mbB

(56) Entgegenhaltungen:
- EP-A1- 2 615 274
- WO-A1-2012/076726
- DE-A1- 10 349 164
- DE-A1-102005 040 887
- DE-A1-102012 020 366
- DE-T2- 69 734 819
- US-A1- 2006 236 692

## Beschreibung

Die Erfindung betrifft ein Verfahren zur Ansteuerung eines Antriebssystems eines Kraftfahrzeugs mit einer Brennkraftmaschine, insbesondere ein derartiges Verfahren für den Überdrehzahlschutz des Antriebssystems. Die Erfindung betrifft ferner eine Vorrichtung, die zur Durchführung eines solchen Verfahrens ausgeführt ist.

Aus der Praxis ist es bekannt, dass unter bestimmten Betriebsbedingungen eines Kraftfahrzeugs die thermodynamische Kopplung von Motor und Abgasturbolader zu kritischen Zuständen am Abgasturbolader führen kann, z. B. zu einer Überdrehzahl bei heißem Abgas und hohem Abgasmassenstrom. Bei Auftreten solcher Überdrehzahlen besteht die Gefahr der Beschädigung des Läufers des Abgasturboladers, des Ladeluftsystems und in bestimmten Fällen auch der Brennkraftmaschine, bedingt durch einen zu hohen Ladedruck und damit Verbrennungsspitzendruck.

Aus dem Stand der Technik ist es bekannt, derartige kritische Betriebsbedingungen über Motorsensoren, beispielsweise zur Messung des Ladedrucks oder der Abgastemperatur, zu erkennen und durch eine Begrenzung der Einspritzmenge zu vermeiden oder zu beenden.

Gerät die Brennkraftmaschine in den Bereich von Überdrehzahlen, wird gemäß der DE 32 38 191 C2 eine Sollwertverstellung für den maximalen Ladedruckwert und entsprechend eine Abregelung der der Brennkraftmaschine zugeführten Einspritzmenge vorgenommen. Aus der DE 28 03 750 C2 ist bekannt, den Überdrehzahlschutz direkt in die elektrische Endstufe der Ansteuerung des Kraftstoffpumpen-Mengenstellwerks eingreifen zu lassen, um die Brennkraftmaschine vor zerstörender Überdrehzahl zu schützen. Um ein schnelles Eingreifen zu ermöglichen, wird ferner vorgeschlagen, das dem Überdrehzahlschutz zugeführte Drehzahlsignal nicht durch einen Tiefpass zu filtern (bzw. höchstens über einen Tiefpass mit sehr hoher Grenzfrequenz), wogegen alle verwendeten Drehzahlsignale gefiltert sind mit einer Tiefpassfrequenz von ca. 6 Hz, um ungleichförmige Winkelgeschwindigkeiten während eines Brennkraftmaschinenzyklus nicht als Störanregung wirksam werden zu lassen. Nachteilig an einer derartigen Lösung ist, dass diese spezifisch an die Ausgestaltung eines speziellen Kraftstoffzumesssystems angepasst ist und eine vergleichsweise aufwändige Signalverarbeitung erfordert.

Nachteilig ist ferner, dass nicht immer eine ausreichend schnelle Reduzierung der Drehzahl erreicht werden kann, wenn diese im Überdrehzahlbereich ist.

Aus den Druckschriften DE 10 2005 040 887 A1, DE 697 34 819 T2, WO 2012/076726 A1, US 2006/0236692 A1 und DE 103 49 164 A1 sind Ansätze bekannt, eine elektrische Maschine, die in Antriebsverbindung mit einem Abgasturbolader steht, bei bestimmten Betriebssituationen zu aktivieren.

Es ist somit eine Aufgabe der Erfindung, ein verbessertes Verfahren zur Ansteuerung eines Antriebssystems eines Kraftfahrzeugs, insbesondere ein derartiges Verfahren für den Überdrehzahlschutz des Antriebssystems, bereitzustellen, mit dem Nachteile herkömmlicher Verfahren vermieden werden können und das sich durch eine vereinfachte Verfahrensführung auszeichnet. Ferner wäre es wünschenswert, einen Überdrehzahlschutz bereitzustellen, mit dem schneller kritische Überdrehzahlzustände beseitigt werden können. Eine weitere Aufgabe ist es, eine Vorrichtung zur Ansteuerung eines Antriebssystems eines Kraftfahrzeugs mit einer aufgeladenen Brennkraftmaschine bereitzustellen, die in der Lage ist, ein Verfahren für den Überdrehzahlschutz des Antriebssystems auszuführen, mit der Nachteile herkömmlicher Vorrichtungen vermieden werden können.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Erfindungsgemäß wird ein Verfahren zur Ansteuerung eines Antriebssystems eines Kraftfahrzeugs mit einer aufgeladenen Brennkraftmaschine bereitgestellt, insbesondere ein derartiges Verfahren für den Überdrehzahlschutz des Antriebssystems.

Gemäß allgemeinen Gesichtspunkten der Erfindung wird geprüft, ob wenigstens eine Aktivierungsbedingung zur Aktivierung eines Überdrehzahlschutzes des Antriebssystems erfüllt ist. Falls wenigstens eine Aktivierungsbedingung erfüllt ist, wird der Überdrehzahlschutz aktiviert, bei dem ein generatorischer Betrieb eines elektrifizierten Abgasturboladers gestartet wird, um eine Drehzahl des Abgasturboladers zu kontrollieren. Mit anderen Worten wird der Überdrehzahlschutz durch den temporären generatorischen Betrieb des elektrifizierten Abgasturboladers realisiert, oder der temporäre generatorische Betrieb des elektrifizierten Abgasturboladers stellt zumindest eine Maßnahme zur Ausbildung des Überdrehzahlschutzes dar.

Mittels des generatorischen Betriebs des elektrifizierten Abgasturboladers wird der Läufer des Abgasturboladers abgebremst, so dass die Läufer-Drehzahl unter einen kritischen oberen Grenzwert und/oder auf einen Wert unterhalb eines Überdrehzahlbereichs abgesenkt werden kann und/oder auf einen vorbestimmten Drehzahlbereich einregelt werden kann. Mit sinkender Läuferdrehzahl sinkt ferner der Ladedruck der Brennkraftmaschine und damit die Motordrehzahl.

Ein elektrifizierter Abgasturbolader ist an sich aus dem Stand der Technik bekannt und wird auch als ein elektromotorisch betreibbarer bzw. elektromotorisch unterstützter Abgasturbolader bezeichnet. Der elektrifizierte Abgasturbolader wird zunehmend anstelle eines herkömmlichen Abgasturboladers eingesetzt und weist eine elektrische Maschine auf, die drehmomentübertragend mit der Antriebswelle des Abgasturboladers oder allgemein dem Läufer koppelbar bzw. gekoppelt ist. Die elektrische Maschine kann je nach Ansteuerung ihrer Leistungselektronik zum Antrieb bzw. zur Antriebsunterstützung des Abgasturboladers vorgesehen sein (nachfolgend auch als elektromotorischer Betrieb des Abgasturboladers bezeichnet) und/oder kann vom Abgasturbolader generatorisch betrieben werden (nachfolgend auch als generatorischer Betrieb des Abgasturboladers bezeichnet). Der Läufer des Abgasturboladers ist aus der Abgasturbine, dem Verdichter und der Antriebswelle gebildet, wobei die Abgasturbine und der Verdichter über die Antriebswelle bewegungsgekoppelt sind. Aus der Praxis ist bereits bekannt, mit dem Elektromotor eines elektromotorisch unterstützten Abgasturboladers den Aufladeprozess der Brennkraftmaschine temporär zu unterstützen, insbesondere zur Überbrückung des sogenannten Turbolochs beim Anfahren.

Die Erfindung umfasst also die allgemeine technische Lehre, zur Aufladung der Brennkraftmaschine einen elektrifizierten Abgasturbolader zu verwenden und diesen in einem Überdrehzahlbereich, in dem die Motordrehzahl und/oder die Drehzahl des Abgasturboladers ihren zulässigen oberen Drehzahlbereich überschritten hat oder zu überschreiten droht, zur Ausbildung eines Überdrehzahlschutzes temporär generatorisch zu betreiben, vorzugsweise zumindest bis der kritische Überdrehzahl-Betriebszustand beendet ist. Dadurch können Überdrehzahlen oder zumindest länger andauernde Überdrehzahlen, z. B. im Höhenbetrieb des Fahrzeugs oder auf Gefällestrecken, verhindert werden. Durch den erfindungsgemäßen generatorischen Betrieb des Abgasturboladers kann ferner der Motor vor zu hohem Zünddruck und das Ladeluftsystem vor zu hohem Ladedruck geschützt werden.

Die Ausbildung eines Überdrehzahlschutzes für ein Antriebssystem einer aufgeladenen Brennkraftmaschine mittels eines generatorischen Betriebs eines elektrifizierten Abgasturboladers bietet insbesondere bei Fahrzeugen, die bereits mit elektrifizierten Abgasturboladern ausgestattet sind, den Vorzug, dass weitere Zusatzsysteme oder Anpassungen der Kraftstoffeinspritzung entfallen können.

Besonders vorteilhaft ist jedoch, die erfindungsgemäße Verwendung des generatorischen Betriebs des Abgasturboladers in einem Überdrehzahlbereich mit einem herkömmlichen Überdrehzahlschutz zu kombinieren, wie z. B. einer temporären Begrenzung oder Reduzierung der Einspritzmenge, um eine besonders schnelle Rückführung einer Überdrehzahl in einen normalen Betriebsbereich zu ermöglichen.

Im Rahmen der Erfindung wird als Aktivierungsbedingung zur Aktivierung des Überdrehzahlschutzes eine Bedingung herangezogen, die erfüllt ist, wenn eine Fehlfunktion eines Abgasrückführungs-Ventils und/oder eines Wastegate-Ventils vorliegt.

Eine bevorzugte Ausführungsform der Erfindung sieht vor, dass als Aktivierungsbedingung zur Aktivierung des Überdrehzahlschutzes ein Drehzahl-Istwert eines Teiles im Antriebsstrang einen Grenzdrehzahl-Sollwert für den Überdrehzahlschutz der Brennkraftmaschine erreichen und/oder überschreiten muss. Der Drehzahl-Istwert des Teiles im Antriebsstrang kann beispielsweise der Drehzahl-Istwert der Brennkraftmaschine, auch als Motordrehzahl bezeichnet, und/oder der Drehzahl-Istwert des Läufers des Abgasturboladers sein. Unter Berücksichtigung des aktuellen Übersetzungsverhältnisses kann auch eine Getriebedrehzahl verwendet werden.

Der Grenzdrehzahl-Sollwert für den Überdrehzahlschutz des entsprechenden Teiles im Antriebsstrang ist ein Schwellenwert für die Drehzahl des entsprechenden Teiles, dessen Erreichen oder Überschreiten einen Überdrehzahlzustand und/oder einen Beginn eines Überdrehzahlbereiches kennzeichnet, in dem eine Beschädigung des Teiles droht, falls die Drehzahl nicht zeitnah wieder unter den Schwellenwert gesenkt wird. Derartige Grenzdrehzahl-Sollwerte können bauteilespezifisch und antriebsstrangspezifisch experimentell festgelegt werden.

Eine weitere Ausführungsform der Erfindung sieht vor, dass als Aktivierungsbedingung zur Aktivierung des Überdrehzahlschutzes ein Ladedruck-Istwert einen Grenzladedruck-Sollwert für den Überdrehzahlschutz der Brennkraftmaschine erreichen und/oder überschreiten muss.

Die Überschreitung eines Grenzladedruck-Sollwerts wird durch einen zu hohen Drehzahl-Istwert des Läufers des Abgasturboladers verursacht, so dass ein zu hoher Ladedruck ebenfalls als Parameter zur Erkennung eines Überdrehzahlzustands bzw. als Aktivierungsbedingung für den Überdrehzahlschutz herangezogen werden kann.

Eine weitere Ausführungsform der Erfindung sieht vor, dass als Aktivierungsbedingung zur Aktivierung des Überdrehzahlschutzes eine Abgastemperatur einen Abgastemperaturgrenzwert überschreiten muss. Zu heißes Abgas stellt eine alternative Möglichkeit zur Erkennung eines Überdrehzahlzustands bzw. allgemein eines für den Abgasturbolader kritischen Betriebszustandes dar. Dadurch können Überdrehzahlen beispielsweise aufgrund eines verblockten Luftfilters verhindert werden.

Eine weitere Möglichkeit der erfindungsgemäßen Realisierung sieht vor, dass eine Aktivierungsbedingung zur Aktivierung des Überdrehzahlschutzes erfüllt ist, wenn eine Fehlfunktion eines VTG-Stellers vorliegt. Dadurch können Überdrehzahlen in derartigen Fehlerfällen vermieden oder zumindest schnell wieder reduziert werden. Die Fehlfunktion kann beispielsweise von der Motorsteuerung anhand geeigneter Sensordaten ermittelt werden. Bei einer vorteilhaften Variante kann die Fehlfunktion anhand einer ungewollten Schließstellung des Abgasrückführungs-Ventils und/oder des Wastegate-Ventils ermittelt werden, und/oder die Fehlfunktion kann anhand einer Schwergängigkeit oder anhand eines Klemmens des VTG-Stellers ermittelt werden.

Das Verwenden wenigstens einer der vorgenannten Fehlfunktionen als Aktivierungsbedingung zur Aktivierung des Überdrehzahlschutzes bietet ferner den Vorteil, dass das Vorliegen einer derartigen Fehlfunktion eine "Frühwarnfunktion" für einen drohenden Überdrehzahlzustand darstellt, so dass bereits sehr früh der erfindungsgemäße Überdrehzahlschutz aktiviert werden kann. Andererseits kann ein Defekt des AGR-Ventils oder des Wastegate-Ventils, wenn diese in der Schließstellung verharren, dauerhaft zu einem ungewollten Aufbau eines Gegendrucks im Abgasstrang und damit zur einer dauerhaften überhöhten Drehzahl des Abgasturboladers führen, so dass diese Betriebssituationen im Hinblick auf eine Beschädigung des Abgasturbolader-Läufers oder des Ladeluftsystems besonders kritisch sind.

Über das Abgasrückführungs-Ventil (AGR-Ventil) wird bekanntermaßen die Menge des rückgeführten Abgases gesteuert. Als Wastegate-Ventil wird üblicherweise ein in einer Abgas-Bypassleitung befindliches Abgas-Bypassventil bezeichnet. Das Wastegate-Ventil wird durch ein Wastegate-Ventil-Stellglied entsprechend dem Luftdruck im Auslass für Ansaugluft geregelt, der üblicherweise als Ladedruck bezeichnet wird. Als VTG-Steller wird ein Aktuator bezeichnet, der durch Vorgabe einer Stellgröße lastabhängig von einem Ladedruckregler im Betriebssteuergerät der Brennkraftmaschine angesteuert wird und bei einem Abgasturbolader mit variabler Turbinengeometrie (VTG) zum Einsatz kommt. Die Verstellung der Turbinengeometrie mittels des VTG-Stellers bietet eine Möglichkeit, den Ladedruck eines Abgasturboladers zu beeinflussen.

Weiterhin ist zu erwähnen, dass gemäß einer weiteren Ausführungsvariante der generatorische Betrieb des elektrifizierten Abgasturboladers solange aufrecht erhalten werden kann, bis die Drehzahl des elektrifizierten Abgasturboladers einen vorbestimmten Schwellenwert wieder unterschreitet oder bis die wenigstens eine Aktivierungsbedingung zur Aktivierung des Überdrehzahlschutzes nicht mehr erfüllt ist.

Gemäß einem besonders bevorzugten Ausführungsbeispiel wird bei Aktivierung des Überdrehzahlschutzes des Antriebsystems nicht nur der generatorische Betrieb des elektrifizierten Abgasturboladers gestartet, sondern ferner eine Begrenzung der Einspritzmenge des Brennstoffes der Brennkraftmaschine vorgenommen.

Die Begrenzung der Einspritzmenge zur Ausbildung eines Überdrehzahlschutzes ist an sich aus dem Stand der Technik bekannt. In Kombination mit dem generatorischen Betrieb des Abgasturboladers bieten diese beiden Maßnahmen vorteilhafterweise einen besonders effektiven Überdrehzahlschutz.

Gemäß einem weiteren Gesichtspunkt der Erfindung wird eine Vorrichtung zur Ansteuerung eines Antriebssystems eines Kraftfahrzeugs mit einer aufgeladenen Brennkraftmaschine bereitgestellt. Die Vorrichtung ist ausgeführt, das Verfahren wie in diesem Dokument offenbart auszuführen. Die Vorrichtung ist insbesondere ausgeführt, nach Erfüllung wenigstens einer Aktivierungsbedingung zur Aktivierung eines Überdrehzahlschutzes des Antriebssystems einen Überdrehzahlschutz des Antriebsystems zu aktivieren, bei dem ein generatorischer Betrieb eines elektrifizierten Abgasturboladers gestartet wird, um eine Drehzahl des Abgasturboladers zu kontrollieren.

Die Erfindung betrifft ferner ein Kraftfahrzeug, insbesondere ein Nutzfahrzeug, das eine erfindungsgemäße Vorrichtung mit einer Vorrichtung zur Ansteuerung des Antriebssystems des Kraftfahrzeugs aufweist.

Die zuvor beschriebenen bevorzugten Ausführungsformen und Merkmale der Erfindung sind beliebig miteinander kombinierbar, insbesondere können die verschiedenen Aktivierungsbedingungen zur Aktivierung des Überdrehzahlschutzes kombiniert werden, so dass beispielsweise der Überdrehzahlschutz aktiviert wird, wenn zumindest eine der vorgenannten Aktivierungsbedingungen erfüllt ist. Weitere Einzelheiten und Vorteile der Erfindung werden im Folgenden unter Bezug auf die beigefügten Zeichnungen beschrieben. Es zeigen:
- Figur 1: ein schematisches Blockschaltbild zur Illustration eines Antriebssystems eines Kraftfahrzeugs mit einer Brennkraftmaschine und einer Steuervorrichtung zur Ansteuerung des Antriebssystems gemäß einer Ausführungsform der Erfindung; und
- Figur 2: ein Ablaufdiagramm eines Verfahrens zur Ansteuerung des Antriebssystems aus Figur 1 zur Ausbildung eines Überdrehzahlschutzes gemäß einer Ausführungsform der Erfindung.

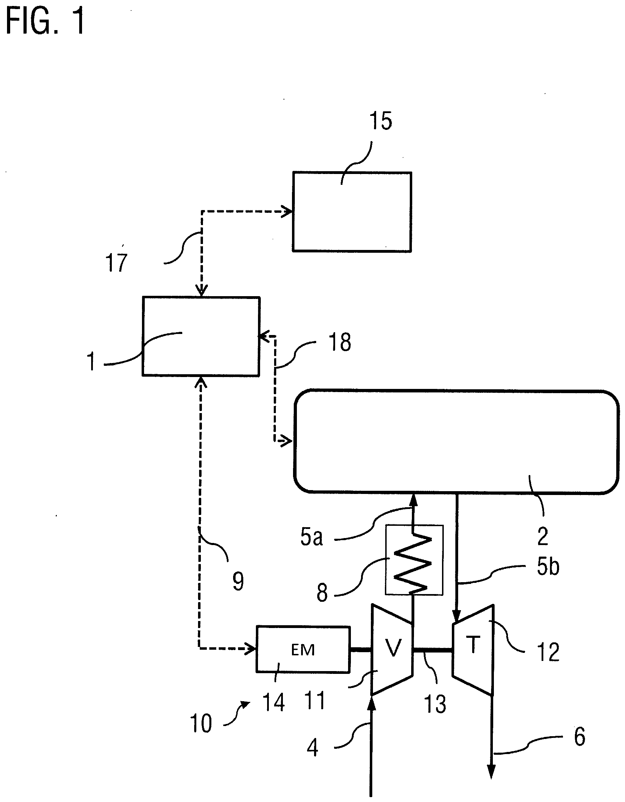

Figur 1 zeigt in Form eines stark schematisierten Blockschaltbildes ein Antriebssystem eines Nutzfahrzeugs. Das Antriebssystem umfasst eine aufgeladene Brennkraftmaschine 2, typischerweise einen Dieselmotor, und einen ihr zugeordneten elektrifizierten Abgasturbolader 10, nachfolgend auch als ATL bezeichnet. Der ATL 10 umfasst eine Turbine 12, die von einem Abgas der Brennkraftmaschine 2, das der Turbine 12 über die Abgasleitung 5b zugeführt wird, angetrieben wird. Danach strömt das Abgasgemisch über den Turbinenauslass in eine Abgasleitung 6 zum Auspuff und durchläuft dabei noch eine Abgasnachbehandlungseinrichtung (nicht dargestellt), falls vorhanden.

Die Turbine 12 ist durch eine Welle 13 mit einem Verdichter 11 verbunden. Dem Verdichter 11 wird über die Verdichtereinlassleitung 4 Frischluft zugeführt. Der Verdichter 11 verdichtet die der Brennkraftmaschine 2 zuzuführende Ladeluft und steigert somit die Leistung der Brennkraftmaschine 2 im normalen befeuerten Betrieb. Die durch den Verdichter 11 verdichtete Ladeluft wird über eine Ladeluftleitung einem Ladeluftkühler 8 zugeführt und anschließend über die Leitung 5a in die Brennkraftmaschine 2 eingespeist.

Der ATL 10 ist als elektrifizierter, d. h. als elektromotorisch unterstützter Abgasturbolader ausgeführt. Der ATL 10 ist hierzu mit einer motorisch und generatorisch betreibbaren elektrischen Maschine 14 versehen, die drehmomentübertragend mit der Antriebswelle 13 koppelbar bzw. gekoppelt ist und zum Antrieb bzw. zur Antriebsunterstützung des Läufers 11, 12, 13 des Abgasturboladers vorgesehen ist.

Der wahlweise motorische oder generatorische Betrieb der elektrischen Maschine 14, z. B. eines Elektromotors, wird von einer Steuervorrichtung 1 gesteuert, die hierzu über elektrische Leitungen mit dem Elektromotor 14 und mit einem Energiespeicher 15 für elektrische Energie, z. B. einer konventionellen Starterbatterie oder einer Hochvoltbatterie eines hybridisierten Antriebsstrangs, verbunden ist, was durch die gepunkteten Linien 9 und 17 schematisch dargestellt ist. Die Leitungen 9 und 17 dienen sowohl zur Stromversorgung als auch als Steuerleitungen. Für den motorischen Betrieb der elektrischen Maschine 14 wird dieser Energie von dem Energiespeicher 15 zugeführt. Der im generatorischen Betrieb der elektrischen Maschine 14 erzeugte Strom kann über die Steuervorrichtung 1 dem Energiespeicher 15 zugeführt werden. Im generatorischen Betrieb des Abgasturboladers 10 wird die elektrischen Maschine 14 von der Bewegungsenergie des Läufers 11, 12, 13 angetrieben und die Bewegungsenergie in Form von elektrischer Energie durch die elektrische Maschine 14 rekuperiert. Dadurch wird der Läufer 11, 12, 13 des ATLs 10 abgebremst und die ATL-Drehzahl sinkt.

Die Steuervorrichtung 1 ist in an sich bekannter Weise als Motorsteuerung zur Ansteuerung der Komponenten des Antriebssystems, insbesondere zur Ansteuerung der Brennkraftmaschine 2, ausgeführt. Hierzu ist die Steuervorrichtung 1 über eine bidirektionale Signalleitung 18 mit der Brennkraftmaschine 2 verbunden.

Eine Besonderheit der erfindungsgemäßen Lehre liegt darin, dass die Steuervorrichtung 1 ferner eingerichtet ist, bei Bedarf einen Überdrehzahlschutz für die Komponenten des Antriebssystems zu aktivieren, insbesondere zum Überdrehzahlschutz des ATL-Läufers 11, 12, 13 des Ladeluftsystems und der Brennkraftmaschine 2. Hierzu ist die Steuervorrichtung 1 insbesondere ausgeführt, nach Erfüllung wenigstens einer Aktivierungsbedingung zur Aktivierung des Überdrehzahlschutzes den Überdrehzahlschutz zu aktivieren, bei dem die Steuervorrichtung 1 die elektrische Maschine 14 des elektrifizierten ATLs 10 so ansteuert, dass diese im generatorischen Betrieb betrieben wird, um so den ATL-Läufer 11, 12, 13 abzubremsen.

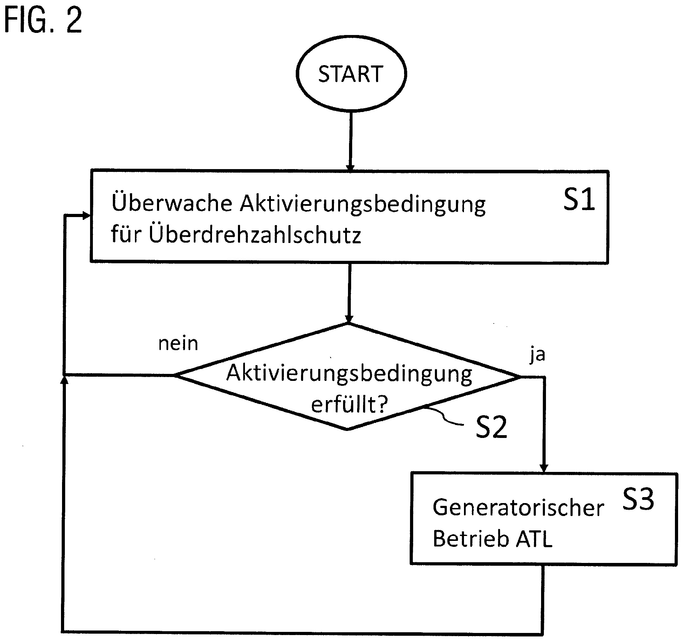

Die entsprechende Funktionsweise der Steuervorrichtung 1 und das korrespondierende Verfahren sind beispielhaft in dem Ablaufdiagramm der Figur 2 illustriert.

In Schritt S1 überwacht die Steuervorrichtung 1 eine vorgegebene Aktivierungsbedingung für den Überdrehzahlschutz. Alternativ kann die Steuervorrichtung 1 auch eingerichtet sein, mehrere vorgegebene Aktivierungsbedingungen zu überwachen.

Im vorliegenden Ausführungsbeispiel ist als Aktivierungsbedingung zur Aktivierung des Überdrehzahlschutzes beispielsweise vorgegeben, dass ein Drehzahl-Istwert der Brennkraftmaschine 2 einen Motor-Grenzdrehzahl-Sollwert für den Überdrehzahlschutz der Brennkraftmaschine überschreiten muss. Die Motordrehzahl wird in der Regel fortlaufend auch für andere Steuerfunktionen überwacht. Als Aktivierungsbedingung zur Aktivierung des Überdrehzahlschutzes kann auch der Drehzahl-Istwert des ATL-Läufers 11, 12, 13 verwendet werden, der mit einem ATL-Drehzahlsensor überwacht werden kann. Wenn dieser einen ATL-Grenzdrehzahl-Sollwert für den Überdrehzahlschutz der Brennkraftmaschine überschreitet, kann wiederum der Überdrehzahlschutz aktiviert werden.

Weitere alternative oder zusätzliche Aktivierungsbedingungen zur Aktivierung des Überdrehzahlschutzes können die Überschreitung eines Grenzladedruck-Sollwerts durch den Ladedruck-Istwert und die Überschreitung eines Abgastemperaturgrenzwerts durch die aktuelle Abgastemperatur sein, die entsprechend durch einen Ladedrucksensor oder einen Abgastemperatursensor gemessen werden können.

Vorstehend wurde bereits erwähnt, dass auch eine von der Steuervorrichtung 1 erkannte Fehlfunktion eines Abgasrückführungs-Ventils, eines Wastegate-Ventils und/oder eines VTG-Stellers als Aktivierungsbedingung verwendet werden kann (in Figur 1 jeweils nicht dargestellt). Eine Aktivierungsbedingung zur Aktivierung des Überdrehzahlschutzes ist gemäß dieser Variante erfüllt ist, wenn eine Fehlfunktion eines Abgasrückführungs-Ventils, eines Wastegate-Ventils und/oder eines VTG-Stellers vorliegt.

Beispielsweise kann die Fehlfunktion anhand einer ungewollten Schließstellung des Abgasrückführungs-Ventils und/oder des Wastegate-Ventils ermittelt werden. Unter einer ungewollten Schließstellung wird eine Schließstellung verstanden, die sich trotz einer gegenteiligen Steuervorgabe auf das entsprechende Stellglied eingestellt hat, so dass z. B. das AGR-Ventil offen sein sollte, tatsächlich aber geschlossen ist. Eine Fehlfunktion des VTG-Stellers kann anhand einer festgestellten Schwergängigkeit oder anhand eines Klemmens des VTG-Stellers ermittelt werden.

Hierbei können an sich bekannte Diagnoseverfahren zu Erkennung derartiger Fehlfunktionen verwendet werden. Eine Möglichkeit, den Zustand bzw. das Verhalten des AGR-Ventils zu diagnostizieren, ist es beispielsweise, ein Integral aus dem Produkt der Abweichung von einem Istwert zu einem Sollwert der rückgeführten Luftmasse und dem Anstieg einer zugehörigen Sollwertkurve zu bilden. Dies bedeutet im Wesentlichen ein Maß für die Fläche zwischen der Istwertkurve und der zugehörigen Sollwertkurve des Luftmassenstroms. Somit kann der Integralwert (Residuum) nach Ablauf einer kumulierten Freigabezeit mit einem Schwellwert verglichen werden und bei Überschreiten des Schwellwerts auf einen Fehler geschlossen werden (Symptom).

Eine weitere Möglichkeit zur Diagnose der in der Abgasanlage enthaltenen Stellglieder kann beispielsweise beim Turbolader angewendet werden, indem in einem Leerlaufbetrieb des Kraftfahrzeugs ein Aktuator des Turboladers (VTG-Steller, VTG bedeutet "Variable TurbinenGeometrie") mit einer Sinusschwingung beaufschlagt wird ("Modulationssignal"). Gleichzeitig wird ein einen Ladedruck und/oder einen Luftmassenstrom charakterisierendes Signal ("Messsignal") ausgewertet, indem aus dem Integral der Fouriertransformierten des Signals ein Merkmal (Residuum) gebildet wird, dessen Wert mit einem Schwellwert verglichen wird. Daraus kann abgeleitet werden, ob ein Fehler des VTG-Stellers, beispielsweise eine Schwergängigkeit oder ein Klemmen, vorliegt.

Ein weiteres mögliches Diagnoseverfahren zur Erkennung einer Fehlfunktion für Stellglieder im Abgasstrang, insbesondere für ein Stellglied eines Abgasrückführventils, einen Ladedrucksteller eines Turboladers, insbesondere einen VTG-Steller oder einen Wastegate-Steller des Turboladers, ist aus der DE 10 2011 005 463 A1 bekannt.

In Schritt S2 wird fortlaufend geprüft, ob wenigstens einer der vorgegebenen Aktivierungsbedingungen für die Aktivierung des Überdrehzahlschutzes erfüllt ist, d. h., ob z. B. eine der vorgenannten Fehlfunktionen der AGR-Ventils, des Westgate-Ventils oder des VTG-Stellers erkannt wurde. Ist dies nicht der Fall, werden in Schritt S1 die Aktivierungsbedingungen weiter überwacht. Ist jedoch wenigstens eine der Aktivierungsbedingungen erfüllt, wird mit Schritt S3 fortgefahren und der Überdrehzahlschutz aktiviert.

In Schritt S3 startet die Steuervorrichtung 1 über die Signalleitung 9 einen generatorischen Betrieb des elektrischen Motors 14 des ATLs 10, wodurch der Läufer 11, 12, 13 des ATLs abgebremst wird. Die Bewegungsenergie des Läufers 11, 12, 13 wird zum Teil in elektrische Energie umgewandelt und dem Bordnetz bzw. dem Energiespeicher 15 zugeführt. Bedingt durch den generatorischen Betrieb des ATLs 10 wird der Läufer abgebremst und der Ladedruck der Brennkraftmaschine 2 reduziert.

Der generatorische Betrieb des ATLs 10 wird so lange aufrechterhalten, bis die Aktivierungsbedingung, die den generatorischen Betrieb ausgelöst hat, nicht mehr erfüllt ist. Anschließend wird mit Schritt S1 fortgefahren, wodurch sich der Steuerkreis schließt.

Die Erfindung ist nicht auf die vorstehend beschriebenen bevorzugten Ausführungsbeispiele beschränkt.

### Bezugszeichenliste

- 1: Steuervorrichtung
- 2: Brennkraftmaschine
- 4: Verdichtereinlassleitung
- 5a: Verdichterauslassleitung bzw. Ladeluftleitung
- 5b: Turbineneinlassleitung
- 6: Turbinenauslassleitung
- 8: Ladeluftkühler
- 9: Elektrische Leitung
- 10: Elektrifizierter Abgasturbolader
- 11: Verdichter
- 12: Turbine
- 13: Antriebswelle
- 14: Elektrische Maschine
- 15: Speicher für elektrische Energie
- 17: Elektrische Leitung
- 18: Signalleitung

## Patentansprüche

1. Verfahren zur Ansteuerung eines Antriebssystems eines Kraftfahrzeugs mit einer aufgeladenen Brennkraftmaschine (2), **wobei** nach Erfüllung (S1, S2) wenigstens einer Aktivierungsbedingung (S1, S2) zur Aktivierung eines Überdrehzahlschutzes des Antriebsystems der Überdrehzahlschutz aktiviert wird, bei dem ein generatorischer Betrieb eines elektrifizierten Abgasturboladers (10) gestartet wird (S3) **dadurch gekennzeichnet, dass** eine Aktivierungsbedingung zur Aktivierung des Überdrehzahlschutzes erfüllt ist, wenn eine Fehlfunktion eines Abgasrückführungsventils und/oder eines Wastegate-Ventils vorliegt.

2. Verfahren nach Anspruch 1, **dadurch gekennzeichnet, dass** als Aktivierungsbedingung zur Aktivierung des Überdrehzahlschutzes ein Drehzahl-Istwert eines Teiles im Antriebsstrang einen Grenzdrehzahl-Sollwert für den Überdrehzahlschutz der Brennkraftmaschine (2) überschreiten muss.

3. Verfahren nach Anspruch 2, **dadurch gekennzeichnet, dass** der Drehzahl-Istwert eines Teiles im Antriebsstrang der Drehzahl-Istwert der Brennkraftmaschine (2) und/oder der Drehzahl-Istwert des Läufers (11, 12, 13) des elektrifizierten Abgasturboladers (10) ist.

4. Verfahren nach einem der vorhergehenden Ansprüche, **dadurch gekennzeichnet, dass** als Aktivierungsbedingung zur Aktivierung des Überdrehzahlschutzes ein Ladedruck-Istwert einen Grenzladedruck-Sollwert für den Überdrehzahlschutz der Brennkraftmaschine (2) überschreiten muss.

5. Verfahren nach einem der vorhergehenden Ansprüche, **dadurch gekennzeichnet, dass** eine Aktivierungsbedingung zur Aktivierung des Überdrehzahlschutzes erfüllt ist, wenn eine Fehlfunktion eines VTG-Stellers zur Veränderung der Turbinengeometrie vorliegt.

6. Verfahren nach einem der vorhergehenden Ansprüche, **dadurch gekennzeichnet, dass** die Fehlfunktion anhand einer ungewollten Schließstellung des Abgasrückführungs-Ventils und/oder des Wastegate-Ventils ermittelt wird.

7. Verfahren nach Anspruch 5 oder nach Ansprüchen 5 und 6 **dadurch gekennzeichnet, dass** die Fehlfunktion anhand einer Schwergängigkeit oder eines Klemmens des VTG-Stellers ermittelt wird.

8. Verfahren nach einem der vorhergehenden Ansprüche, **dadurch gekennzeichnet, dass** als Aktivierungsbedingung zur Aktivierung des Überdrehzahlschutzes eine Abgastemperatur einen Abgastemperaturgrenzwert überschreiten muss.

9. Verfahren nach einem der vorhergehenden Ansprüche, **dadurch gekennzeichnet, dass** der generatorische Betrieb des elektrifizierten Abgasturboladers (10) so lange aufrecht erhalten wird,
(a) bis die Drehzahl des elektrifizierten Abgasturboladers (10) einen vorbestimmten Schwellenwert unterschreitet; und/oder
(b) bis die wenigstens eine Aktivierungsbedingung zur Aktivierung des Überdrehzahlschutzes nicht mehr erfüllt ist.

10. Verfahren nach einem der vorhergehenden Ansprüche, **dadurch gekennzeichnet, dass** bei Aktivierung des Überdrehzahlschutzes des Antriebsystems eine Begrenzung der Einspritzmenge des Brennstoffes der Brennkraftmaschine (2) vorgenommen wird.

11. Vorrichtung (1) zur Ansteuerung eines Antriebssystems eines Kraftfahrzeugs mit einer aufgeladenen Brennkraftmaschine (2), wobei die Vorrichtung (1) ausgeführt ist, nach Erfüllung wenigstens einer Aktivierungsbedingung zur Aktivierung eines Überdrehzahlschutzes des Antriebssystems einen Überdrehzahlschutz des Antriebsystems zu aktivieren, bei dem ein generatorischer Betrieb eines elektrifizierten Abgasturboladers (10) gestartet wird, **dadurch gekennzeichnet, dass** eine Aktivierungsbedingung zur Aktivierung des Überdrehzahlschutzes erfüllt ist, wenn eine Fehlfunktion eines Abgasrückführungs-Ventils und/oder eines Wastegate-Ventils vorliegt.

12. Vorrichtung (1) nach Anspruch 11, **dadurch gekennzeichnet, dass** die Vorrichtung (1) ausgeführt ist, das Verfahren gemäß einem der Ansprüche 2 bis 10 auszuführen.

13. Kraftfahrzeug, insbesondere Nutzfahrzeug, mit einer Vorrichtung (1) nach Anspruch 11 oder 12.

## Claims

1. Method for activating a drive system of a motor vehicle with a supercharged internal combustion engine (2), wherein following the fulfilment (S1, S2) of at least one activation condition (S1, S2) for the activation of the overspeed protection of the drive system, the overspeed protection is activated, whereby a generator mode of an electrified exhaust gas turbocharger (10) is started (S3), **characterized in that** an activation condition for the activation of the overspeed protection is fulfilled if there is a malfunction of an exhaust gas recirculation valve and/or of a wastegate valve.

2. Method according to Claim 1, **characterized in that** an actual revolution rate value of a part in the drive train must exceed a revolution rate limit target value for the overspeed protection of the internal combustion engine (2) as an activation condition for the activation of the overspeed protection.

3. Method according to Claim 2, **characterized in that** the actual revolution rate value of a part in the drive train is the actual revolution rate value of the internal combustion engine (2) and/or the actual revolution rate value of the rotor (11, 12, 13) of the electrified exhaust gas turbocharger (10).

4. Method according to any one of the preceding claims, **characterized in that** an actual charging pressure value must exceed a charging pressure limit target value for the overspeed protection of the internal combustion engine (2) as an activation condition for the activation of the overspeed protection.

5. Method according to any one of the preceding claims, **characterized in that** an activation condition for the activation of the overspeed protection is fulfilled if there is a malfunction of a VTG actuator for changing the turbine geometry.

6. Method according to any one of the preceding claims, **characterized in that** the malfunction is determined from an unintended closed position of the exhaust gas recirculation valve and/or of the wastegate valve.

7. Method according to Claim 5 or according to claims 5 and 6, **characterized in that** the malfunction is determined from stiffness or jamming of the VTG actuator.

8. Method according to any one of the preceding claims, **characterized in that** an exhaust gas temperature must exceed an exhaust gas temperature limit value as an activation condition for the activation of the overspeed protection.

9. Method according to any one of the preceding claims, **characterized in that** the generator mode of the electrified exhaust gas turbocharger (10) is maintained,
(a) until the revolution rate of the electrified exhaust gas turbocharger (10) is below a predetermined threshold value; and/or
(b) until the at least one activation condition for the activation of the overspeed protection is no longer fulfilled.

10. Method according to any one of the preceding claims, **characterized in that** limitation of the fuel injection amount of the internal combustion engine (2) is carried out on activation of the overspeed protection of the drive system.

11. Apparatus (1) for activating a drive system of a motor vehicle with a supercharged internal combustion engine (2), wherein the apparatus (1) is implemented to activate the overspeed protection of the drive system following the fulfilment of at least one activation condition for the activation of the overspeed protection of the drive system, whereby a generator mode of an electrified exhaust gas turbocharger (10) is started, **characterized in that** an activation condition for the activation of the overspeed protection is fulfilled if there is a malfunction of an exhaust gas recirculation valve and/or of a wastegate valve.

12. Apparatus (1) according to claim 11, **characterized in that** the apparatus (1) is implemented to carry out the method according to any one of Claims 2 to 10.

13. Motor vehicle, in particular a commercial vehicle, with an apparatus (1) according to claim 11 or 12.

## Revendications

1. Procédé de commande d'un système de propulsion d'un véhicule automobile comprenant un moteur à combustion interne (2) suralimenté, une protection anti-surrégime du système de propulsion étant activée après qu'au moins une condition d'activation (S1, S2) soit remplie (S1, S2) pour l'activation de la protection anti-surrégime, lors de laquelle un fonctionnement en mode générateur d'un turbocompresseur de gaz d'échappement (10) électrifié est démarré (S3), **caractérisé en ce qu'**une condition d'activation pour l'activation de la protection anti-surrégime est remplie lorsqu'il existe un défaut de fonctionnement d'une vanne de recyclage des gaz d'échappement et/ou d'une soupape de décharge.

2. Procédé selon la revendication 1, **caractérisé en ce que** la condition d'activation pour l'activation de la protection anti-surrégime est qu'une vitesse de rotation réelle d'une pièce dans la chaîne cinématique doit dépasser une vitesse de rotation limite de consigne pour la protection anti-surrégime du moteur à combustion interne (2).

3. Procédé selon la revendication 2, **caractérisé en ce que** la vitesse de rotation réelle d'une pièce dans la chaîne cinématique est la vitesse de rotation réelle du moteur à combustion interne (2) et/ou la vitesse de rotation réelle du rotor (11, 12, 13) du turbocompresseur de gaz d'échappement (10) électrifié.

4. Procédé selon l'une des revendications précédentes, **caractérisé en ce que** la condition d'activation pour l'activation de la protection anti-surrégime est qu'une pression d'admission réelle doit dépasser une pression d'admission limite de consigne pour la protection anti-surrégime du moteur à combustion interne (2).

5. Procédé selon l'une des revendications précédentes, **caractérisé en ce qu'**une condition d'activation pour l'activation de la protection anti-surrégime est remplie lorsqu'il existe un défaut de fonctionnement d'un élément de réglage de géométrie de turbine variable servant à modifier la géométrie de la turbine.

6. Procédé selon l'une des revendications précédentes, **caractérisé en ce que** le défaut de fonctionnement est déterminé au moyen d'une position de fermeture non souhaitée de la vanne de recyclage des gaz d'échappement et/ou de la soupape de décharge.

7. Procédé selon la revendication 5 ou selon les revendications 5 et 6, **caractérisé en ce que** le défaut de fonctionnement est déterminé au moyen d'un grippage ou d'un blocage de l'élément de réglage de géométrie de turbine.

8. Procédé selon l'une des revendications précédentes, **caractérisé en ce que** la condition d'activation pour l'activation de la protection anti-surrégime est qu'une température des gaz d'échappement doit dépasser une température limite des gaz d'échappement.

9. Procédé selon l'une des revendications précédentes, **caractérisé en ce que** le fonctionnement en mode générateur du turbocompresseur de gaz d'échappement (10) électrifié est maintenu
(a) jusqu'à ce que la vitesse de rotation du turbocompresseur de gaz d'échappement (10) électrifié devienne inférieure à une valeur de seuil prédéterminée ; et/ou
(b) jusqu'à ce que l'au moins une condition d'activation pour l'activation de la protection anti-surrégime ne soit plus remplie.

10. Procédé selon l'une des revendications précédentes, **caractérisé en ce qu'**une limitation de la quantité injectée de carburant du moteur à combustion interne (2) est effectuée lors de l'activation de la protection anti-surrégime du système de propulsion.

11. Dispositif (1) de commande d'un système de propulsion d'un véhicule automobile comprenant un moteur à combustion interne (2) suralimenté, le dispositif (1) étant conçu pour activer une protection anti-surrégime du système de propulsion après qu'au moins une condition d'activation soit remplie pour l'activation d'une protection anti-surrégime, lors de laquelle un fonctionnement en mode générateur d'un turbocompresseur de gaz d'échappement (10) électrifié est démarré, **caractérisé en ce qu'**une condition d'activation pour l'activation de la protection anti-surrégime est remplie lorsqu'il existe un défaut de fonctionnement d'une vanne de recyclage des gaz d'échappement et/ou d'une soupape de décharge.

12. Dispositif (1) selon la revendication 11, **caractérisé en ce que** le dispositif (1) est conçu pour mettre en oeuvre le procédé selon l'une des revendications 2 à 10.

13. Véhicule automobile, notamment véhicule utilitaire, équipé d'un dispositif (1) selon la revendication 11 ou 12.
